# EUROPÄISCHE PATENTANMELDUNG

(11) **EP 4 239 991 A1**
(43) Veröffentlichungstag der Anmeldung: **06.09.2023**
(21) Anmeldenummer: 22159327.0
(22) Anmeldetag: 01.03.2022
(51) Int. Cl.: H04M 3/527, H04M 3/51

(54) **TECHNIKEN, UM ANFRAGEN VON NUTZER IN EINEM TELEKOMMUNIKATI-ONSSYSTEM INTELLIGENT ZU BEARBEITEN**

(71) Anmelder: Deutsche Telekom AG, 53113 Bonn (DE)
(72) Erfinder: JAHN, Carl, 65191 Wiesbaden (DE); HOCHSTÄTTER, Bernd, 64289 Darmstadt (DE); CASPAR, Marius, 51143 Köln (DE)
(74) Vertreter: Braun-Dullaeus Pannen Emmerling Patent- & Rechtsanwaltspartnerschaft mbB

(57) **Zusammenfassung**

Die vorliegende Erfindung betrifft Techniken zum Beantworten von Anfragen eines Nutzers, insbesondere Anfragen von Kunden, in einem Telekommunikationssystem umfassend zumindest einen Kommunikationskanal und einen Kommunikationsservice, insbesondere umfasst das Telekommunikationssystem mehrere Kommunikationskanäle und/oder Kommunikationsservices,
• wobei eine Anfrage des Nutzers über zumindest einen ersten Kommunikationskanal und einen ersten Kommunikationsservice an einen Adressaten, insbesondere einen Geschäftsmann, gestellt wird,
• wobei die Anfrage an eine an einer zentralen Stelle im Telekommunikationssystem vorgesehene, dem Adressaten zugeordnete intelligente Anfragen-Antworteinheit weitergeleitet wird und die intelligente Anfragen-Antworteinheit die Anfrage auswertet und basierend auf der Anfrage eine mit Informationen angereicherte Nachricht erstellt und vermittels einer der Kommunikationskanäle und vermittels einer der Kommunikationsservices an den Adressaten und/oder den Nutzer sendet.

## Beschreibung

Die vorliegende Erfindung betrifft das technische Gebiet der Beantwortung von Anfragen von Nutzern, insbesondere von Kunden, in einem Telekommunikationssystem und insbesondere ein Verfahren, eine Kommunikationsplattform sowie ein Telekommunikationssystem zur Beantwortung solcher Nutzeranfragen.

Digitale Kommunikation findet immer mehr Einzug in das tägliche Leben von Menschen, zusätzlich zu der schon bekannten analogen Kommunikation, wie sie beispielsweise durch herkömmliche Telefone realisiert werden kann. Nicht nur im beruflichen, sondern auch im privaten Umfeld verlagert sich die Kommunikation immer mehr von einer synchronen Kommunikation zu einer asynchronen Kommunikation, wobei die Nutzer eine Vielzahl von verschiedenen Kommunikationskanälen bzw. Kommunikationsservices benutzen.

Zum Beginn der Ära des analogen Telefons war eine Kommunikation mit einer anderen Person über das Telefonnetz nur dann möglich, wenn der Anzurufende auch zur selben Zeit an dem Ort eines bestimmten Telefonanschlusses verfügbar war. Nach einigen Jahren hat sich diese "gleichzeitige" Art der Kommunikation durch beispielsweise die Einführung von Anrufbeantwortern oder der Mobilbox immer mehr in einer asynchronen Kommunikation verlagert. Die klassische asynchrone Kommunikation in Form von Briefen wird zunehmend durch die digitale Variante "E-Mail" abgelöst. Mithilfe des Anrufbeantworters oder mithilfe der E-Mail ist es einem Anrufer nunmehr möglich, selbst dann eine Information oder eine Nachricht hörbar zu hinterlassen, wenn der Anzurufende in diesem Moment nicht verfügbar ist.

Vor allem im Geschäftsumfeld hat dies aber die Folge, dass das angerufene Geschäft auch aktiv auf die Nachricht bzw. auf die Anfrage reagieren muss. Meist kommt die Situation vor, dass der Anfragensteller erst mal überhaupt kein Feedback bezüglich seiner Anfrage bekommt und deshalb überhaupt nicht einschätzen kann, ob beispielsweise seine Anfrage für eine Terminvereinbarung erfolgreich war. Dies erfährt er erst dann, wenn er - unter Umständen Tage später - die Antwort erhält.

Mittels Telefonhotlines und sogenannten IVR (Interactive Voice Response) "Sprachdialogsystemen" wurde in der Vergangenheit versucht mithilfe von automatisierten Ansagen und Auswertungen schon vorab Anfragen zu lösen bevor diese an einen Mitarbeiter weitergeleitet werden müssen.

Dieser Trend schreitet fortwährend voran nicht nur, dass Kommunikationen zunehmend asynchroner werden, es werden auch für diese Kommunikation verschiedenste Kommunikationskanäle, Services usw. benutzt. Beispielsweise kann eine Telefonkommunikation sowohl über WLAN als auch über ein Handynetz geführt werden, wobei eine WhatsApp Nachricht sowohl über WLAN als auch über Festnetz versendet werden kann. Weitere Kommunikationsservices sind beispielsweise E-Mail, Facebook, Web-Chat etc. Möglich ist also eine Kombination aller dieser Kommunikationsservices mit denen für sie zugängliche Kommunikationstechnik um eine Kommunikation zu ermöglichen.

Gerade aber die Vielfalt der Kommunikationsservices macht es zunehmend unwahrscheinlich, dass der Anzurufende zum Zeitpunkt des Anrufs auch über den Kommunikationsservice verfügbar ist, den der Anrufer gerade nutzt.

Für große Unternehmen mit geeigneten Mitteln und Infrastruktur ist es prinzipiell möglich, die verschiedenen Kundenanfragen über die verschiedenen Kommunikationsservices schnellstmöglich zu beantworten. Jedoch stellt dies insbesondere für kleinere Unternehmen oder sogar für Privatpersonen eine zunehmende Belastung dar.

Diese Überlastung von Unternehmen ohne die notwendige Manpower führt zu Frustration auf beiden Seiten. Zum einen seitens der Unternehmen, da diese die Nachrichtenflut kaum noch bearbeiten können und zum weiteren bei Kunden, die sich eine zeitnahe Reaktion auf ihre Anfrage wünschen. Der vorliegenden Erfindung liegt daher die Aufgabe zugrunde, ein Verfahren, eine Kommunikationsplattform sowie ein Telekommunikationssystem zur verbesserten Beantwortung solcher Nutzeranfragen bereitzustellen.

Die Erfindung löst diese Aufgabe durch die Merkmale der unabhängigen Ansprüche.

Die nachfolgend aufgeführten Merkmale der Erfindung können miteinander kombiniert werden, solange dies nicht technisch ausgeschlossen ist.

Gemäß einem ersten Aspekt der Erfindung ist ein Verfahren zum Beantworten von Anfragen eines Nutzers, insbesondere Anfragen von Kunden, in einem Telekommunikationssystem angegeben, wobei das Telekommunikationssystem zumindest einen Kommunikationskanal und einen Kommunikationsservice aufweist, bevorzugt weist das Telekommunikationssystem mehrere Kommunikationskanäle und faktische oder mehrere Kommunikationsservices auf, das Verfahren umfasst folgende Schritte:
- Stellen einer Anfrage durch den Nutzer über zumindest einen ersten Kommunikationskanal vermittels zumindest eines ersten Kommunikationsservice an einen Adressaten, insbesondere einen Geschäftsmann;
   o bei dem Nutzer kann es sich beispielsweise um einen Kunden handeln, der eine Anfrage bezüglich eines Produktes oder dergleichen stellt. Der Nutzer kann diese Anfrage vermittels seines Endgeräts stellen, wobei das Endgerät mit dem Telekommunikationssystem in einer datenleitenden Verbindung über zumindest einen Kommunikationskanal steht. Bei dem Kommunikationskanal kann es sich um einen Mobilfunkkanal, ein Festnetzkanal, WLAN, DSL Kanal etc. handeln. Bevorzugt kann der Nutzer für die Eingabe der Anfrage einen von mehreren verfügbaren Kommunikationsservice benutzen. Bei einem solchen Kommunikationsservice kann es sich um einen Messenger-Dienst, einen SMS-Dienst, einen E-Mail-Dienst, einen Nachrichtendienst eines sozialen Netzwerks, einen Telefon-Dienst und/oder einen Web-Chat handeln.
- Weiterleiten der Anfrage innerhalb des Telekommunikationssystems an eine dem Adressaten, also insbesondere dem Geschäftsmann, zugeordnete intelligente Anfrage-Antworteinheit ("Smart Call Reply Engine"), wobei die intelligente Anfrage-Antworteinheit bevorzugt an einer zentralen Stelle in dem Telekommunikationssystem vorgesehen ist;
   o indem die intelligente Anfrage-Antworteinheit an der zentralen Stelle des Telekommunikationssystems vorgesehen ist, kann diese auf leistungsstarken Server hinterlegt sein und ist prinzipiell über viele Kommunikationskanäle gut erreichbar. Durch die zentrale Anordnung können auch Datenbanken, die die intelligente Anfrage-Antworteinheit zur Bearbeitung der Anfrage nutzen kann, effektiv aktualisiert bereitgestellt werden. Bei der zentralen Stelle innerhalb des Telekommunikationssystems kann es sich insbesondere um das Core Backend handeln, in das die Anfrage-Antworteinheit integriert werden kann. Mit der Integration in das Core Backend besteht vorteilhaft die Möglichkeit, dass der Betreiber des Kommunikationsnetzes selbst Anrufe terminiert, identifiziert und entsprechend weiterleiten kann, wobei das Weiterleiten nach vorgegebenen Regeln erfolgen kann. Weiterhin ist es hierdurch möglich den Service der intelligenten Anfrage-Antworteinheit allen Nutzern zur Verfügung zu stellen, ohne dass eine eigens vorgesehene App hierfür installiert werden muss. Dies ist besonders dann vorteilhaft, wenn der Nutzer beispielsweise ein herkömmliches Telefon benutzt auf dem keine App installiert werden kann. Hierdurch wird also auch gerade älteren Menschen der Zugang zu der Erfindung erleichtert.
- Auswerten der Anfrage durch die intelligente Anfragen-Antworteinheit;
   ∘ das Auswerten der Anfrage kann beispielsweise mittels bekannter Algorithmen von KI-Systemen von virtuellen Sprachassistenten vorgenommen werden, die aus der Anfrage einen Intent des Nutzers extrahieren. Ein Intent ist eine Aufgabe oder eine Aktion, die ein virtueller Assistent für einen Nutzer erfüllt. Ein Intent kann mehrere Dialogschritte zwischen Sprachassistent und Nutzer umfassen. Um es mit anderen Worten auszudrücken, der "Intent" legt fest, was der Nutzer durch seine Anfrage eigentlich erreichen will; also beispielsweise eine Terminvereinbarung, eine Produktinformation, etc. Gegebenenfalls kann bei dem Auswerten der Anfrage hierbei auch auf Profile und oder Datenbanken des Angerufenen und/oder des Nutzers zurückgegriffen werden. Handelte es sich beispielsweise bei dem Angerufenen um einen bestimmten Unternehmer, so ist es wahrscheinlich, dass der Intent in einem Zusammenhang mit den geschäftlichen Tätigkeiten des Angerufenen steht. Diesen geschäftsbezogenen "Intent" kann bei der Auswertung demnach eine höhere Priorisierung zugeordnet werden. Konkret: handelt es sich beispielsweise um ein Autohaus, ist es sehr wahrscheinlich, dass der Intent die Vereinbarung eines Werkstatttermins oder den Kauf eines neuen Autos betreffen könnte. Informationen des Nutzers aus dem Profil können dahingehend bewertet und gewichtet werden, wie wahrscheinlich es ist, dass ein Nutzer in der Vergangenheit schon einen entsprechenden Intent formuliert hat, diese Gewichtung kann quasi auch automatisiert durch eine KI beim Bereitstellen von entsprechenden Datensätzen in dem Lernprozess der KI verwirklicht sein. Beispielsweise kann als erster Datensatz zum Trainieren der KI die Anfragen der Nutzer und als zweiter Datensatz die realen Antworten des Adressaten verwendet werden;
- Erstellen einer mit Informationen angereicherten Nachricht basierend auf der Anfrage;
   ∘ auch bei diesem Schritt können Profilinformationen des Angerufenen also des Nutzers verwendet werden, um eine mit Informationen angereicherten Nachricht zu erstellen. Bevorzugt wird diese Nachricht basierend auf dem ermittelten Intent abgeleitet. Ein konkretes Beispiel. Es wird also als Intent ermittelt, dass der Nutzer einen Werkstatttermin für sein Auto haben möchte. Die Informationen aus dem Profil des Nutzers können verwendet werden, um Eigenschaften von dessen Auto zu extrahieren, wie beispielsweise Alter, Fahrzeugtyp, gelaufene Kilometer etc. Die Information des Autos können beispielsweise verwendet werden, um zu ermitteln, wann die Werkstatt für diesen Autotyp den nächstmöglichen Werkstatttermin anbieten kann. Die Nachricht kann demnach nach ihrer Erstellung die Information aufweisen, dass für das Auto 1er BMW am 6. Februar 2022 der nächste Werkstatttermin möglich ist; die intelligente Anfragen-Antworteinheit kann die mit Informationen angereicherten Nachricht automatisiert, gegebenenfalls unter Zuhilfenahme geeigneter KI- Algorithmen, generieren;
- Senden der erstellten Nachricht über das Telekommunikationssystem vermittels einer der Kommunikationskanäle und einen der Kommunikationsservices an den Adressaten und/oder den Nutzer.
   ∘ In dem konkreten Beispiel des Werkstatttermins wird hierdurch also ermöglicht, dass sowohl der Nutzer als auch der Adressat, also die Autowerkstatt, obwohl sie nicht notwendigerweise gleichzeitig denselben Kommunikationskanal bedienen, quasi in diesem Sinne dennoch synchron kommunizieren, da für jeden der beiden Teilnehmer die Information sofort bereitsteht. Dies gilt natürlich auch losgelöst von dem konkreten Beispiel des Werkstatttermins für viele weitere Arten der Kommunikation bei denen Informationen zwischen Adressat und Nutzer ausgetauscht werden. Es gibt weitere Arten von Informationen, bei denen nicht der Nutzer und der Adressat informiert (gleichzeitig) werden müssen, sondern wo es ausreicht, jeweils nur den Adressaten oder den Nutzer zu informieren. Fragt der Nutzer beispielsweise nach Öffnungszeiten der Autowerkstatt, genügt es, wenn die erstellte Nachricht lediglich an den Nutzer weitergeleitet wird.

Weitere Vorteile des erfindungsgemäßen Verfahrens sind es, dass hierdurch Anrufe jederzeit auf intelligente Art und Weise angenommen und beantwortet werden können, sodass es keine verpassten Anrufe mehr gibt. Anfragen können vorteilhaft nicht nur über das Telefon, sondern auch über andere Kommunikationsservice und verschiedene Kommunikationskanäle an die intelligente Anruf-Antworteinheit weitergeleitet werden, die diese dann beantwortet.

Die Erfindung ermöglicht es dem Adressaten vorteilhaft die Nachricht auch mit aktuellen Statusinformationen, wie beispielsweise einem Lieferzustand, anzureichern, wenn er eine Datenbank, auf die die intelligente Anfrage-Antworteinheit zugreifen kann, mit entsprechenden Informationen befüllt.

Es wird eine einfache Beantwortung einer Vielzahl von Fragen, vorteilhafter Weise über verschiedene Kommunikationskanäle, ermöglicht. Besonders einfache Anfragen wie etwa, "Wie sind die Öffnungszeiten", "Wie teuer ist ein Produkt", "wann hast du Zeit zu telefonieren?" können zuverlässig beantwortet werden.

Die intelligente Anruf-Antworteinheit, bzw. der entsprechende "Smart Call Reply Voice Application Server" auf dem die intelligente Anruf-Antworteinheit implementiert sein kann, kann also mit dem Nutzer der anruft interagieren und gegebenenfalls sogar einfache Gespräche führen. Bevorzugt hat der Adressat dabei die Möglichkeit im Vorfeld bestimmte Aktionen und Flows zu definieren. Bevorzugt wird eine OmniChannel Funktionalität integriert, sodass es sowohl für den Nutzer als auch für den Adressaten möglich ist, dass der Adressat schnell und einfach während der Session einen Termin mit einem einfachen "Klick" bestätigen kann.

Vorzugsweise wird die erstellte Nachricht vermittelst einem anderen als dem ersten Kommunikationskanal und/oder einem anderen als dem ersten Kommunikationsservice an den Nutzer und/oder den Adressaten weitergeleitet.

Technisch kann dies insbesondere mittels eines sogenannten Orchestrators im Backend realisiert werden, der Zugriff auf die einzelnen Kommunikationsservices hat und diese entsprechend steuern kann. Dem Orchestrator kann zudem den Zustand der Kommunikationskanäle bekannt gemacht werden. Sind dem Orchestrator die Zustände der Kommunikationskanäle bekannt, kann dieser, falls ein Kommunikationskanal ausgefallen ist, einen anderen Kommunikationskanal wählen, sodass die Antwort, also die erstellte Nachricht, zuverlässig an den Nutzer und/oder den Adressaten weitergeleitet werden kann. Insbesondere dadurch aber auch unabhängig davon kann dies bedingen, dass der Orchestrator einen anderen Kommunikationsservice als den ersten Kommunikationsservice wählt mit dem die Anfrage gestellt wurde. Wurde beispielsweise die Anfrage per Festnetztelefon gestellt, wobei kurz nach dem Stellen der Anfrage das Festnetz Störungen aufweist, kann die erstellte Nachricht beispielsweise per WhatsApp oder E-Mail, also über einen anderen Kommunikationskanal und über einen anderen Kommunikationsservice, an den Adressaten und/oder die Nutzer gesendet werden.

Auf vorteilhafter Weise wird hierdurch auch eine Kommunikation zwischen dem Adressaten und dem Nutzer ermöglicht, wenn beide verschiedene Kommunikationsservices benutzen. Der Nutzer kann beispielsweise die Anfrage über sein Festnetztelefon stellen, wobei eine Auswertung der intelligenten Anruf-Antworteinheit ergibt, dass der Adressat nicht über sein Festnetztelefon verfügbar ist und deswegen automatisiert einen anderen Kommunikationsservice auswählt. Zu diesem Zweck kann der Adressat beispielsweise auf der intelligenten Anruf-Antworteinheit ein Profil hinterlegen in dem er spezifiziert, wann er wo verfügbar ist. Zusätzlich kann hierbei auch ein typisches Verhalten des Adressaten zur Wahl des Kommunikationsservice zugrunde gelegt werden. Ist beispielsweise bekannt, dass der Adressat zu einer bestimmten Uhrzeit nur mit sehr geringer Wahrscheinlichkeit über einen bestimmten Kommunikationsservice verfügbar ist, kann die intelligente Anruf-Antworteinheit automatisiert den vielversprechendsten Kommunikationsservice wählen. Zusätzlich oder alternativ ist es auch möglich gesendete Betriebsdaten eines Endgeräts des Adressaten, beispielsweise GPS Daten oder Einwahldaten in Basisstationen, auszuwerten, um zu ermitteln, wo und in welchem Zustand sich das Endgerät befindet und über welchen Kommunikationskanal und/oder Kommunikationsservice diese am besten erreichbar sind. Bei dem Endgerät kann es sich insbesondere um ein Smartphone handeln. Wird das Endgerät aktiv verwendet, ist es sehr wahrscheinlich, dass der Adressat über dieses erreichbar ist. Detektiert die intelligente Anruf-Antworteinheit beispielsweise, dass der Adressat gegenwärtig sein Endgerät benutzt, kann die intelligente Anruf-Antworteinheit einen Kommunikationskanal und einen Kommunikationsservice auswählen, der mit dem Endgerät des Adressaten verknüpft ist. Die hierfür notwendigen Daten sind einem Betreiber des Telekommunikationsnetzwerks typischerweise als normale Betriebsdaten des Endgeräts bekannt, z.B. Einwahldaten in einer Basisstation etc., und können entsprechend für die Auswertung von der intelligenten Anruf-Antworteinheit extrahiert werden.

In einer vorteilhaften Ausgestaltung der Erfindung wird die erstellte Nachricht mit nutzer-spezifischen Informationen angereichert. Dies ermöglicht es der intelligenten Anruf-Antworteinheit den Nutzer bzw. dessen Anfrage möglichst effizient zuzuordnen. Bei Geschäftskunden können also insbesondere Auftragsdaten und/oder Produktdaten o. ä. verwendet werden, um effizient einordnen zu können, worauf sich die Anfrage bezieht. Der Nutzer wird hierbei sogar insbesondere die Möglichkeit haben, modulartig festzulegen, welche nutzer-spezifischen Informationen für die Auswertung extrahiert werden sollen. In einem beispielhaften Fall kann die mit Informationen angereicherte Nachricht lauten, dass die Person XY ein Gespräch wünscht. Auch in einem solchen Fall kann es vorkommen, dass die Person XY vergisst ihren Namen zu sagen, diesen undeutlich ausspricht oder aber eine Rückrufnummer nicht erwähnt. Die intelligente Anruf-Antworteinheit kann aus einem dem Nutzer zugeordneten Profil diese Information extrahieren und die Nachricht entsprechend für den Adressaten anreichern.

In einer bevorzugten Ausführungsformen ist die erstellte Nachricht eine Antwort auf die Anfrage des Nutzers.

Dies bietet den Vorteil, dass der Nutzer sofort eine Antwort auf seine Anfrage bekommt, ohne dass der Adressat hinzugezogen werden muss. Fragt der Nutzer beispielsweise nach Öffnungszeiten, ist dies ein Information, die im Normalfall zuverlässig von der Anruf-Antworteinheit beantwortet werden kann. Zunehmend sind entsprechende KI Systeme - auf denen die intelligente Anruf-Antworteinheit technisch aufgesetzt werden kann - in der Lage auch komplexere Anfragen eigenständig zu beantworten.

In einer bevorzugten Ausgestaltung kann die intelligente Anfrage-Antworteinheit eine Kommunikationsverbindung zwischen dem Adressaten und dem Nutzer aufbauen. Bevorzugt kann dieser Kommunikationsaufbau dann stattfinden, wenn die intelligente Anfrage-Antworteinheit ermittelt, dass sie selbst mit einer bestimmten vordefinierten Wahrscheinlichkeit keine zufriedenstellende eigene Antwort generieren kann. Dies bietet also den Vorteil, dass der Nutzer eine qualitativ hochwertige Antwort bekommen kann. In diesem Fall kann die mit Informationen angereicherte Nachricht lauten: "eine Kommunikationsverbindung zu dem Adressaten wird hergestellt".

Bevorzugt stellt die intelligente Anfragen-Antworteinheit eine Plattform für die Kommunikationsverbindung bereit. Insbesondere können der Nutzer und/oder der Adressat über verschiedenartige Kommunikationskanäle und/oder verschiedenartige Kommunikationsservices mit der intelligenten Anfragen-Antworteinheit als Plattform kommunizieren.

Dies bietet den Vorteil, dass die intelligente Anfragen-Antworteinheit die zentrale "Anlaufstelle" für die Kommunikation zwischen dem Nutzer und dem Adressaten ausbildet. Dies kann so eingerichtet sein, dass der Adressat beispielsweise spezifiziert, welche Kommunikationsservices, die er nutzt, zuerst an die intelligente Anfragen-Antworteinheit geroutet werden. Dies bietet den Vorteil, dass für den Nutzer hierdurch auf jeden Fall zumindest die intelligente Anfragen-Antworteinheit verfügbar ist. Als zentrale Anlaufstelle für die Kommunikation ist es der intelligenten Anfrage-Antworteinheit möglich, die Kombination aus Kommunikationskanal und Kommunikationsservice zu wählen mit der am wahrscheinlichsten eine Kommunikation zwischen dem Adressaten und dem Nutzer bereitgestellt werden kann, wobei diese Kommunikation auch eine asynchrone Kommunikation umfasst.

Vorzugsweise ist die intelligente Anfragen-Antworteinheit ausgebildet die Kommunikation vermittelst der verschiedenen Kommunikationskanäle und/oder Kommunikationsservices kompatibel ineinander umzuwandeln. Dies kann zum einen bedeuten, dass Daten, die über einen ersten Kommunikationskanal übertragen werden so transformiert werden, dass diese über einen zweiten Kommunikationskanal übertragbar sind. Beispielsweise ruft der Nutzer per Festnetz an, wobei der Anruf als WhatsApp Internet Anruf weitergeleitet wird. Dies kann aber auch bedeuten, dass Datenpakete eines ersten Kommunikationsservice so umgewandelt werden, dass diese über einen zweiten Kommunikationsservice übertragbar sind. Beispielsweise übermittelt der Nutzer eine Nachricht als WhatsApp und die Nachricht soll per E-Mail an den Adressaten weitergeleitet werden. Dies umfasst aber auch, dass der Nutzer eine Nachricht spricht, dieser Text von der intelligenten Anfrage-Anrufeinheit transkribiert und per E-Mail weitergesendet werden kann. Weitere Beispiele für eine solche Umwandlung können sein UDP und TCP Protokolle ineinander umzuwandeln. Der Server auf dem die intelligente Anfrage-Antworteinheit implementiert ist, kann hierzu insbesondere ein Protokollumwandlungsmodul aufweisen.

Hierzu kann die intelligente Anfrage-Antworteinheit auf Datenbanken zurückgreifen, wo Übersetzungsvorschriften für die Umwandlung der einzelnen Datenpakete von einem Protokoll in ein anderes Protokoll hinterlegt sein können. Sind der intelligenten Anfrage-Antworteinheit das ursprüngliche und das Zielprotokoll bekannt, kann mittels eines entsprechend eingerichteten Algorithmus die Umwandlung ausgeführt werden.

Hierdurch wird eine enorme Flexibilität bei der Kommunikation zwischen dem Nutzer und dem Adressaten ermöglicht.

In einer Ausführungsform kann der Adressat Optionen der intelligenten Anfragen-Antworteinheit durch eine Short-Cut Logik individuell konfigurieren. In diesem Sinne sind Optionen als das konfigurierbare Verhalten der intelligenten Anfrage-Antworteinheit zu verstehen. Folgende Optionen können beispielsweise konfiguriert werden:
- Do-Not-Disturb Funktion
   - dies ermöglicht dem Adressaten zu spezifizieren, weil er ungestört sein möchte;
- Kalenderanbindung für eine automatische Terminvereinbarung
   - dies ermöglicht eine automatisierte Terminvereinbarung zwischen dem Nutzer und dem Adressaten;
- automatische Anrufererkennung und Entscheidung, welche Daten oder Funktionen für den Anrufer, als den Nutzer, verfügbar sind;
   - ist beispielsweise die Nummer des Nutzers der Anruf im Adressbuch nicht bekannt, hat dieser keine Möglichkeit herauszufinden, wann der Adressat verfügbar ist. Weiterhin ist es möglich, dass bei einer Terminabsprache - beispielsweise mit einem Friseur - die Kundenkartei direkt geladen wird und ein neuer Termin mit einem ganz bestimmten Friseur des Geschäfts vereinbart wird, insbesondere mit dem Friseur, der den Kunden zuletzt bedient hat.
- Weitere Aktionen können über andere Kommunikationsservices (WhatsApp, Apps) getriggert werden. Dadurch hat der Adressat die Möglichkeit, einen Termin beispielsweise sofort über WhatsApp zu bestätigen, obwohl er über das Medium, dass der Anrufer nutzt, nicht verfügbar ist. Hierdurch kann der Anrufer sofort Feedback bekommen, obwohl er nicht direkt mit dem Adressaten kommuniziert. Insbesondere können Aktionen über einen Anruf getriggert, aber über WhatsApp oder SMS bestätigt werden (Omni Channel).

In einer Ausführungsform werden die Anfragen jeweils an einem entsprechenden SIP Connector terminiert.

Dies bietet den Vorteil, dass die Connectoren insbesondere eingerichtet sein können die Kernaufgaben wie Authentifizierung, Use State/Context, Call handling, Termination und/oder Session Managment auszuführen.

Die SIP Connector können eingerichtet werden, die Anfragen nach einem festen konfigurierbaren Regelwerk an den Adressaten weiterzuleiten. Werden beispielsweise nur solche Anfragen weitergeleitet, die erfolgreich authentifiziert wurden, erhöht dies die Sicherheit des Adressaten.

Gemäß einem zweiten Aspekt der Erfindung ist eine Intelligente Anfragen-Antworteinheit angegeben, wobei die Intelligente Anfragen-Antworteinheit eingerichtet ist zum
- Empfangen einer Anfrage eines Nutzers über zumindest einen ersten Kommunikationskanal und einen ersten Kommunikationsservice an einen Adressaten, insbesondere einen Geschäftsmann;
- Vorsehen der Intelligenten Anfragen-Antworteinheit an einer zentralen Stelle in einem Telekommunikationssystem, wobei die Intelligente Anfragen-Antworteinheit zumindest ein Kommunikationsinterface für zumindest einen Kommunikationskanal aufweist;
   ∘ hierzu kann die Intelligente Anfragen-Antworteinheit insbesondere auf einem Server innerhalb des Telekommunikationssystems als Algorithmus implementiert sein;
- Auswerten der Anfrage und Erstellen einer mit Informationen angereicherten Nachricht basierend auf der Anfrage;
   ∘ die Anfrage kann insbesondere mit einem Algorithmus ausgewertet werden, der spezifische Eigenschaften des Adressaten berücksichtigt. Eine Möglichkeit dies technisch zu realisieren ist mittels eines trainierten Machine Learnings Algorithmus und/oder durch Zugriff auf Datenbanken, die Informationen über den Adressaten aufweisen. Anhand des zuvor schon beschriebenen Beispiels eine Autowerkstatt, kann dies bedeutet, dass in den Datenbanken beispielsweise Öffnungszeiten der Werkstatt aufgelistet sind;
   ∘ zudem ist der Algorithmus eingerichtet zumindest einen Kommunikationsservice, bevorzugt mehrere Kommunikationsservices, verarbeiten zu können. Gegebenenfalls weist der Algorithmus zusätzlich ein Sprachzu-Text Umwandlungsmodul auf, um einen Telefonanruf des Nutzers zunächst in eine textbasierte Form umwandeln zu können;
- Senden der erstellten Nachricht vermittels einer der Kommunikationskanäle und vermittels einer der Kommunikationsservices an den Adressaten und/oder den Nutzer.

Gemäß einem dritten Aspekt der Erfindung ist ein Telekommunikationssystem vorgeschlagen, umfassend
- eine Kommunikationsumgebung mit zumindest einem Kommunikationskanal,
- ein Nutzerendgerät, eingerichtet zum Kommunikationsaufbau über den zumindest einen Kommunikationskanal,
- die zuvor beschriebene Intelligente Anfragen-Antworteinheit, wobei das Telekommunikationssystem eingerichtet ist zur Ausführung der Schritte des vorstehend beschriebenen Verfahrens.

Gemäß einem vierten Aspekt der Erfindung ist ein Computerprogramm Produkt angegeben. Das Computerprogramm Produkt ist implementiert auf einem Prozessor und eingerichtet zum Ausführen der Schritte:
- Auswerten eine Anfrage eines Nutzers und Erstellen einer mit Informationen angereicherten Nachricht basierend auf der Anfrage.

Die Vorteile dieser weiteren Aspekte der Erfindung entsprechen im Wesentlichen denen, die im Zusammenhang mit dem Verfahren beschrieben sind.

Im Folgenden werden bevorzugte Ausführungsbeispiele der vorliegenden Erfindung unter Bezugnahme auf die begleitenden Figuren erläutert:
- Fig. 1:: zeigt die technische Infrastruktur des erfindungsgemäßen Telekommunikationssystems.
- Fig. 2:: zeigt die technische Infrastruktur anhand eines beispielhaften Telefonanrufs als Kommunikationsservice.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

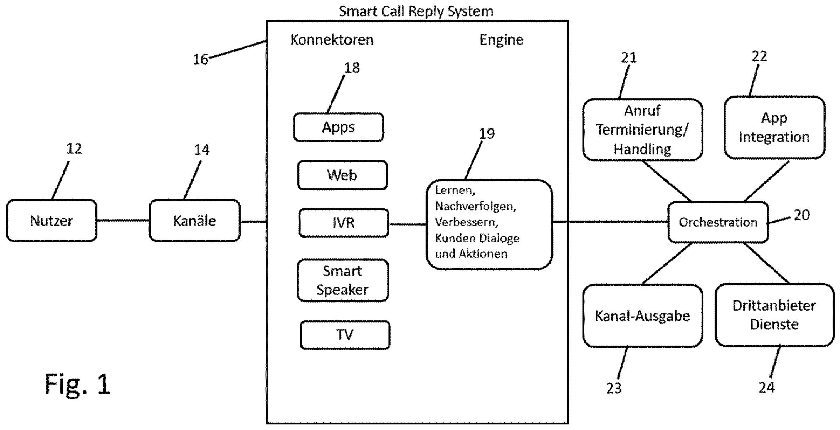

Fig. 1 zeigt die technische Infrastruktur des erfindungsgemäßen Telekommunikationssystems.

Im Wesentlichen ist die technische Lösung in drei Bereiche aufgeteilt. Eine User Infrastruktur 10 stellt einem Nutzer 12 die technischen Möglichkeiten zur Kommunikation mit dem Telekommunikationssystem bereit. Insbesondere nutzte hierbei Nutzerendgeräte wie beispielsweise ein Smartphone, einen Computer, ein Tablet und/oder einen intelligenten Lautsprecher. Der Nutzer 12 ein Mobilfunknetz oder auch beispielsweise über ein WLAN oder über ein Festnetz auf verschiedene Kommunikationskanäle 14 zugreifen. Folglich können diese Kommunikationskanäle 14 beispielsweise ein Mobilfunknetz, ein WLAN und/oder ein Festnetz umfasst. Zudem kann der Nutzer auf einen jeweiligen Kommunikationskanal 14 mit zumindest einem Kommunikationsservice, insbesondere mit mehreren Kommunikationsservice, zugreifen. Beispielsweise kann der Nutzer 12 über das Mobilfunknetz eine Anfrage sowohl über eine Telefonfunktion seines Smartphones als auch über eine Applikation wie beispielsweise WhatsApp stellen. Der Nutzer 12 hat also die Möglichkeit über einen von ihm gewählten Kommunikationskanal und Kommunikationsservice den Adressaten zu kontaktieren. Hierbei kann der Nutzer 12 den Kommunikationsservice sowohl über Sprache als auch über Texteingabe bedienen.

Diese Anfrage wird über den Kommunikationskanal 14 in Richtung einer intelligenten Anfrage-Antworteinheit 16 übertragen. Die intelligente Anfragen-Antworteinheit 16 kann Konnektoren 18 umfassen, die die Anfragen über den entsprechenden Kommunikationskanal 14 terminieren und Kernaufgaben wie Authentifizierung, Use States, Kontext, Call Handling und Session Management übernehmen. Hierbei können insbesondere für jeden Kommunikationsservice eigene Konnektoren 18 vorgesehen sein. So beispielsweise ein spezieller Konnektor 18 für Apps, Web, IVR, Smart Speaker und/oder TV.

Eine Kernfunktionalität wird durch eine "Smart Call Reply Engine" 19 der intelligenten Anfrage-Antworteinheit 16 bereitgestellt. Diese kann insbesondere als ein KI System ausgestattet sein, die mittels Machine Learning Methoden spezifisch auf die Bedürfnisse des Adressaten hin trainiert sein kann. Im wesentlichen kümmert sich die "Smart Call Reply Engine" 19 darum den möglichen "Flow" abzubilden, den "Flow" mit verfügbaren Informationen anzureichern und gegebenenfalls dynamisch definierte Aktionen des Adressaten auszuführen. Der "Flow" umfasst die von dem Nutzer gestellte Anfrage im Kontext eines Intents. Die intelligente Anfrage-Antworteinheit 16 ist ein sogenannter Orchestrator 20 angebunden, wobei der Orchestrator 20 die Funktion erfüllt, andere Systeme zu integrieren und benötigte Informationen zur Verfügung zu stellen und Daten weiterzuleiten. Insbesondere kann der Orchestrator 20 eingerichtet sein Anrufe zu terminieren 21, Applikationen 22 zu integrieren, einen Ausgangskommunikationskanal 23 zu wählen und/oder Services 24 von Drittanbietern einzubinden. Der Orchestrator 20 stellt also die OmniChannel Funktion Realität bereit und koordiniert diese. Mithilfe einer Applikation oder Webseite hat der Adressat die Möglichkeit spezielle Aktionen oder Flows festzulegen, die Regeln, wie die intelligente Anfrage-Antworteinheit 16 auf die Anfragen reagiert.

Als konkretes Beispiel: der Nutzer 12 fragt über das Mobilfunknetz 14 vermittels WhatsApp nach einem Werkstatttermin für sein Auto. Diese Anfrage wird an einem APP-Konnektor 18 terminiert und authentifiziert. Danach wird diese Anfrage an die "Smart Call Reply Engine" 19 weitergeleitet, wobei der entsprechend implementierte Algorithmus, gegebenenfalls der Zugriff auf eine Datenbank des Adressaten, heraussucht, wann die Werkstatt des Adressaten den nächsten Termin frei hat. Die Smart Call Reply Engine" 19 erstellt also eine diese Informationen angereicherten Nachricht. Da der Nutzer 12 über das Mobilfunknetz 14 vermittels WhatsApp angefragt hat, behält der Orchestrator 20 WhatsApp und das Mobilfunknetz 14 als Output-Channel für die erstellte Nachricht und sendet diese an den Nutzer 12. Der Nutzer 12 bekommt also zeitnah ohne merkliche Verzögerung eine Antwort auf seine Anfragen.

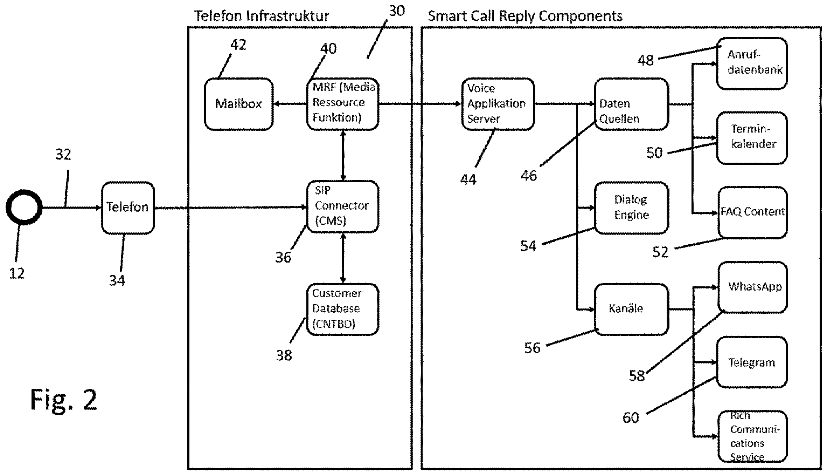

Fig. 2 zeigt die technische Infrastruktur anhand eines beispielhaften Telefonanrufs als Kommunikationsservice.

Für eine Integration der Intelligenten Anfrage-Antworteinheit 16 in die Core Telefoninfrastruktur 30 eines Telekommunikationsdienstleisters kann auf ein bereits bestehendes System aufgebaut werden.

In Fig. 2 stellt der Nutzer eine Anfrage in einem ersten Schritt 32 per Telefon 34. Dieser Telefonanruf wird von einem vorhandenen "SIP Connector" 36 anhand der anzurufenden Nummer terminiert. Gegebenenfalls wird hierzu eine "Customer Database" 38 verwendet.

Anhand des Profils der Nummer des Adressaten wird dann einem MRF Modul 40 (Media Ressource Funktion- Modul) überprüft, ob der Adressat die Funktion "intelligente Anfrage Beantwortung" für die entsprechende Nummer aktiviert hat. Ist dies nicht der Fall, wird der Anruf an eine herkömmliche Mailbox 42 weitergeleitet, falls diese eingerichtet ist.

Ist die Funktion "intelligente Anfrage Beantwortung" für die entsprechende Nummer aktiviert, so wird der Anruf an einen "Smart Call Reply Application Server" 44 weitergeleitet auf dem die "Smart Call Reply Engine" 19 implementiert ist, die das Gespräch übernimmt und mit dem Nutzer der anruft interagiert. Hierbei hat der Adressat, also der Anzurufende, im Vorfeld die Möglichkeit Aktionen und Flows zu definieren. Insbesondere für die Interaktion mit dem Nutzer, kann die "Smart Call Reply Engine" 19 auf Datenbanken 46, wie etwa einer Anrufdatenbank 48, einen Terminkalender 50 und/oder auf FAQ Content 52 zugreifen. Für den Dialog mit dem Anrufer kann die "Smart Call Reply Engine" 19 auf eine Dialog Engine 54 zugreifen. Als mögliche Kommunikationsservices 56, über die die "Smart Call Reply Engine" 19 die erstellte Nachricht sendet kann die "Smart Call Reply Engine" 19 beispielsweise zwischen WhatsApp 58, Telegram 60 oder einem "Rich Communications" Service 62 auswählen. Hierdurch wird die vorstehend schon erwähnte OmniChannel Indikation sowohl für den Nutzer der anruft als auch für den Adressaten bereitgestellt. Hierdurch ist es also möglich, dass der Adressat schnell und einfach während einer "Session" ein Termin schon mit einem einfachen "klick" bestätigen kann, was ihm sonst nicht möglich wäre, da der Adressat sonst zunächst erst seine Termine checken müsste um den Termin dann zu bestätigen.

## Patentansprüche

1. Verfahren zum Beantworten von Anfragen eines Nutzers, insbesondere Anfragen von Kunden, in einem Telekommunikationssystem umfassend zumindest einen Kommunikationskanal und einen Kommunikationsservice, insbesondere umfasst das Telekommunikationssystem mehrere Kommunikationskanäle und/oder Kommunikationsservices,
• wobei eine Anfrage des Nutzers über zumindest einen ersten Kommunikationskanal und einen ersten Kommunikationsservice an einen Adressaten, insbesondere einen Geschäftsmann, gestellt wird,
• wobei die Anfrage an eine an einer zentralen Stelle im Telekommunikationssystem vorgesehene, dem Adressaten zugeordnete intelligente Anfragen-Antworteinheit weitergeleitet wird und die intelligente Anfragen-Antworteinheit die Anfrage auswertet und basierend auf der Anfrage eine mit Informationen angereicherte Nachricht erstellt und vermittels einer der Kommunikationskanäle und vermittels einer der Kommunikationsservices an den Adressaten und/oder den Nutzer sendet.

2. Verfahren nach Anspruch 1, **dadurch gekennzeichnet, dass** die erstellte Nachricht vermittels einem anderen als dem ersten Kommunikationskanal weitergeleitet wird.

3. Verfahren nach einem der vorhergehenden Ansprüche, **dadurch gekennzeichnet, dass** die erstellte Nachricht mit nutzer-spezifischen Informationen angereichert wird.

4. Verfahren nach Anspruch 3, **dadurch gekennzeichnet, dass** die erstellte Nachricht eine Antwort auf die Anfrage des Nutzers darstellt.

5. Verfahren nach einem der vorhergehenden Ansprüche, **dadurch gekennzeichnet, dass** die intelligente Anfragen-Antworteinheit eine Kommunikationsverbindung zwischen dem Adressaten und dem Nutzer aufbaut.

6. Verfahren nach Anspruch 5, wobei die intelligente Anfragen-Antworteinheit eine Plattform für die Kommunikationsverbindung bereitstellt.

7. Verfahren nach Anspruch 6, **dadurch gekennzeichnet, dass** der Nutzer und der Adressat über verschiedenartige Kommunikationskanäle und/oder verschiedenartige Kommunikationsservices mit der intelligenten Anfragen-Antworteinheit als Plattform kommunizieren.

8. Verfahren nach Anspruch 7, wobei die intelligente Anfragen-Antworteinheit die Kommunikation vor dem Versenden an den Nutzer oder den Adressaten jeweils entsprechend dem Kommunikationskanal umwandelt, den der Nutzer oder der Adressat verwendet.

9. Verfahren nach einem der vorhergehenden Ansprüche, **dadurch gekennzeichnet, dass** der Adressat Optionen der intelligente Anfragen-Antworteinheit durch eine Short-Cut Logik individuell konfiguriert werden.

10. Verfahren nach einem der vorhergehenden Ansprüche, **dadurch gekennzeichnet, dass** die Anfragen jeweils an einem entsprechenden SIP Connector terminiert werden.

11. Verfahren nach Anspruch 10, **dadurch gekennzeichnet, dass** die SIP Connector die Anfragen nach einem festgelegten Regelwerk an die intelligente Anfragen-Antworteinheit weiterleitet.

12. Intelligente Anfragen-Antworteinheit eingerichtet zum
• Empfangen einer Anfrage eines Nutzers über zumindest einen ersten Kommunikationskanal und einen ersten Kommunikationsservice an einen Adressaten, insbesondere einen Geschäftsmann;
• Vorsehen der Intelligenten Anfragen-Antworteinheit an einer zentralen Stelle in einem Telekommunikationssystem, wobei die Intelligente Anfragen-Antworteinheit zumindest ein Kommunikationsinterface für zumindest einen Kommunikationskanal aufweist;
• Auswerten der Anfrage und Erstellen einer mit Informationen angereicherten Nachricht basierend auf der Anfrage;
• Senden der erstellten Nachricht vermittels einer der Kommunikationskanäle und vermittels einer der Kommunikationsservices an den Adressaten und/oder den Nutzer.

13. Telekommunikationssystem umfassend
• eine Kommunikationsumgebung mit zumindest einem Kommunikationskanal,
• ein Nutzerendgerät, eingerichtet zum Kommunikationsaufbau über den zumindest einen Kommunikationskanal,
• eine Intelligente Anfragen-Antworteinheit nach Anspruch 12, wobei das Telekommunikationssystem eingerichtet ist zur Ausführung der Schritte des Verfahrens nach einem der Ansprüche 1-11.

14. Computer Programm Produkt implementiert auf einem Prozessor und eingerichtet zum Ausführen der Schritte:
• Auswerten eine Anfrage eines Nutzers und Erstellen einer mit Informationen angereicherten Nachricht basierend auf der Anfrage.

## Geänderte Patentansprüche

### Geänderte Patentansprüche gemäss Regel 137(2) EPÜ.

1. Verfahren zum Beantworten von Anfragen eines Nutzers, insbesondere Anfragen von Kunden, in einem Telekommunikationssystem umfassend zumindest einen Kommunikationskanal und einen Kommunikationsservice, insbesondere umfasst das Telekommunikationssystem mehrere Kommunikationskanäle und/oder Kommunikationsservices,
• wobei eine Anfrage des Nutzers über zumindest einen ersten Kommunikationskanal und einen ersten Kommunikationsservice an einen Adressaten, insbesondere einen Geschäftsmann, gestellt wird,
• wobei die Anfrage an eine an einer zentralen Stelle im Telekommunikationssystem vorgesehene, dem Adressaten zugeordnete intelligente Anfragen-Antworteinheit weitergeleitet wird und die intelligente Anfragen-Antworteinheit die Anfrage auswertet und basierend auf der Anfrage eine mit Informationen angereicherte Nachricht erstellt und vermittels einer der Kommunikationskanäle und vermittels einer der Kommunikationsservices an den Adressaten und/oder den Nutzer sendet.

2. Verfahren nach Anspruch 1, **dadurch gekennzeichnet, dass** die erstellte Nachricht vermittels einem anderen als dem ersten Kommunikationskanal weitergeleitet wird.

3. Verfahren nach einem der vorhergehenden Ansprüche, **dadurch gekennzeichnet, dass** die erstellte Nachricht mit nutzer-spezifischen Informationen angereichert wird.

4. Verfahren nach Anspruch 3, **dadurch gekennzeichnet, dass** die erstellte Nachricht eine Antwort auf die Anfrage des Nutzers darstellt.

5. Verfahren nach einem der vorhergehenden Ansprüche, **dadurch gekennzeichnet, dass** die intelligente Anfragen-Antworteinheit eine Kommunikationsverbindung zwischen dem Adressaten und dem Nutzer aufbaut.

6. Verfahren nach Anspruch 5, wobei die intelligente Anfragen-Antworteinheit eine Plattform für die Kommunikationsverbindung bereitstellt.

7. Verfahren nach Anspruch 6, **dadurch gekennzeichnet, dass** der Nutzer und der Adressat über verschiedenartige Kommunikationskanäle und/oder verschiedenartige Kommunikationsservices mit der intelligenten Anfragen-Antworteinheit als Plattform kommunizieren.

8. Verfahren nach Anspruch 7, wobei die intelligente Anfragen-Antworteinheit die Kommunikation vor dem Versenden an den Nutzer oder den Adressaten jeweils entsprechend dem Kommunikationskanal umwandelt, den der Nutzer oder der Adressat verwendet.

9. Verfahren nach einem der vorhergehenden Ansprüche, **dadurch gekennzeichnet, dass** der Adressat Optionen der intelligente Anfragen-Antworteinheit durch eine Short-Cut Logik individuell konfiguriert werden.

10. Verfahren nach einem der vorhergehenden Ansprüche, **dadurch gekennzeichnet, dass** die Anfragen jeweils an einem entsprechenden SIP Connector terminiert werden.

11. Verfahren nach Anspruch 10, **dadurch gekennzeichnet, dass** die SIP Connector die Anfragen nach einem festgelegten Regelwerk an die intelligente Anfragen-Antworteinheit weiterleitet.

12. Intelligente Anfragen-Antworteinheit eingerichtet zum
• Empfangen einer Anfrage eines Nutzers über zumindest einen ersten Kommunikationskanal und einen ersten Kommunikationsservice an einen Adressaten, insbesondere einen Geschäftsmann;
• Vorsehen der Intelligenten Anfragen-Antworteinheit an einer zentralen Stelle in einem Telekommunikationssystem, wobei die Intelligente Anfragen-Antworteinheit zumindest ein Kommunikationsinterface für zumindest einen Kommunikationskanal aufweist;
• Auswerten der Anfrage und Erstellen einer mit Informationen angereicherten Nachricht basierend auf der Anfrage;
• Senden der erstellten Nachricht vermittels einer der Kommunikationskanäle und vermittels einer der Kommunikationsservices an den Adressaten und/oder den Nutzer.

13. Telekommunikationssystem umfassend
• eine Kommunikationsumgebung mit zumindest einem Kommunikationskanal,
• ein Nutzerendgerät, eingerichtet zum Kommunikationsaufbau über den zumindest einen Kommunikationskanal,
• eine Intelligente Anfragen-Antworteinheit nach Anspruch 12, wobei das Telekommunikationssystem eingerichtet ist zur Ausführung der Schritte des Verfahrens nach einem der Ansprüche 1-11.

14. Computer Programm Produkt implementiert auf einem Prozessor und eingerichtet zum Ausführen der Schritte des Verfahrens nach Anspruch 1
• Auswerten eine Anfrage eines Nutzers und Erstellen einer mit Informationen angereicherten Nachricht basierend auf der Anfrage.
